(19) Europäisches Patentamt / European Patent Office / Office européen des brevets

(11) **EP 4 235 949 A1**

(12) **EUROPEAN PATENT APPLICATION**
published in accordance with Art. 153(4) EPC

(43) Date of publication:
**30.08.2023 Bulletin 2023/35**

(21) Application number: **22861743.7**

(22) Date of filing: **25.08.2022**

(51) International Patent Classification (IPC):
*H01M 50/578* (2021.01)     *H01M 50/588* (2021.01)
*H01M 50/581* (2021.01)     *H01M 50/522* (2021.01)
*H01M 50/249* (2021.01)

(52) Cooperative Patent Classification (CPC):
**H01M 50/249; H01M 50/522; H01M 50/578;
H01M 50/581; H01M 50/588;** Y02E 60/10

(86) International application number:
**PCT/KR2022/012768**

(87) International publication number:
**WO 2023/027535 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2021  KR 20210113529
24.08.2022  KR 20220106420**

(71) Applicant: **LG Energy Solution, Ltd.
Seoul 07335 (KR)**

(72) Inventors:
• **JO, Sang-Hyun
  Daejeon 34122 (KR)**
• **KIM, Seung-Hyun
  Daejeon 34122 (KR)**
• **OH, Young-Hoo
  Daejeon 34122 (KR)**
• **OK, Seung-Min
  Daejeon 34122 (KR)**
• **CHO, Young-Bum
  Daejeon 34122 (KR)**
• **HONG, Sung-Goen
  Daejeon 34122 (KR)**

(74) Representative: **Plasseraud IP
66, rue de la Chaussée d'Antin
75440 Paris Cedex 09 (FR)**

(54) **BATTERY PACK HAVING IMPROVED SAFETY**

(57)     Disclosed is a battery pack configured to secure safety even when a high-temperature gas or the like is generated therein due to thermal runaway or the like. The battery pack includes a battery module including at least one battery cell and a module terminal; a pack case configured to cover at least a part of an outer side of the battery module and having a pack terminal on at least one side; and a safety bus bar connected between the module terminal and the pack terminal or between the module terminals to provide a power path and configured to block the power path by a venting gas discharged from the battery module.

EP 4 235 949 A1

FIG. 2

**Description**

TECHNICAL FIELD

The present application claims priority to Korean Patent Application No. 10-2021-0113529 filed on August 26, 2021 in the Republic of Korea and Korean Patent Application No. 10-2022-0106420 filed on August 24, 2022 in the Republic of Korea, the disclosures of which are incorporated herein by reference.

The present disclosure relates to a battery, and more particularly, to a battery pack configured to have improved safety when an event such as thermal runaway occurs, and a vehicle and an energy storage system including the same.

BACKGROUND ART

Recently, as the demand for portable electronic products such as smart phones and smart pads has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on. In particular, the lithium secondary battery has almost no memory effect to ensure free charge and discharge, compared to the nickel-based secondary battery, and the lithium secondary battery is spotlighted due to a very low discharge rate and a high energy density.

The secondary battery may be used alone, but in general, in many cases, a plurality of secondary batteries are electrically connected in series and/or parallel to each other. In particular, the plurality of secondary batteries may be accommodated in one module case while being electrically connected to each other to constitute one battery module. In addition, the battery module may be used alone, or two or more battery modules may be electrically connected in series and/or parallel to each other to form a higher level device such as a battery pack. Here, the battery module and the battery pack may be used interchangeably.

Recently, as issues such as power shortage or eco-friendly energy have emerged, an energy storage system (ESS) for storing produced power has received a lot of attention. Typically, when such an energy storage system is used, it is easy to construct a power management system such as a smart grid system, so that power supply and demand may be easily controlled in a specific region or city. In addition, as the commercialization of electric vehicles is in full swing, the energy storage system may be applied to an electric charging station capable of charging electric vehicles.

In the battery pack used in the energy storage system, at least one battery module, particularly a plurality of battery modules, may be accommodated in the inner space of the pack case. Also, the battery pack may be connected to an external component, such as an external charging/discharging device or another battery pack, through a pack terminal provided on at least one side of the pack case. At this time, inside the battery pack, a power cable or a copper bus bar connected between the pack terminal and the module terminal may be provided as a path for supplying power. In particular, when the plurality of battery modules are included and both positive electrode pack terminals and negative electrode pack terminals are located on the same side, the module terminal of the battery module located far from the portion where the pack terminal is located be connected with the pack terminal be elongating a power cable or the like.

However, in this configuration, when a thermal event such as thermal runaway occurs in a specific battery module, a venting gas may be discharged from the corresponding battery module. At this time, the venting gas discharged from the battery module may be in a high-temperature state, such as about 950°C. Moreover, the venting gas may include sparks, molten electrode discharges, flames, and the like.

When the venting gas with such high heat is discharged, electrical connecting parts inside the battery pack, such as power cables, may be damaged due to the venting gas. In addition, due to such damage, problems such as short circuits may occur. In particular, in the power cable, a copper wire may be configured to be covered with an insulator, and the coating layer may be melted due to the high-temperature venting gas, so that the copper wire inside may be exposed to the outside. At this time, when the copper wire of the power cable contacts the conductor of the battery pack, a short circuit may occur. Moreover, the pack case of the battery pack may be made of a conductive metal material such as steel. Here, when the power cable contacts the pack case due to the flow of venting gas or vibration, a short circuit may occur. In addition, such a short circuit may cause failure or damage of the battery pack as well as cause ignition, which may be a big problem.

DISCLOSURE

Technical Problem

The present disclosure is designed to solve the problems of the related art, and therefore the present disclosure is directed to providing a battery pack configured to secure safety even when a high-temperature gas or the like is generated therein due to thermal runaway or the like, and applications including the same.

However, the technical problems to be solved by the present disclosure are not limited to the above, and other problems not mentioned herein will be clearly understood by those skilled in the art from the following disclosure.

## Technical Solution

In one aspect of the present disclosure, there is provided a battery pack, comprising: a battery module including at least one battery cell and a module terminal; a pack case configured to cover at least a part of an outer side of the battery module and having a pack terminal on at least one side; and a safety bus bar connected between the module terminal and the pack terminal or between the module terminals to provide a power path and configured to block the power path by a venting gas discharged from the battery module.

Here, the safety bus bar may be disposed in a portion to the venting gas is discharged from the battery module.

In addition, a plurality of battery modules may be included and stacked in at least one direction, and the safety bus bar may be configured to be elongated along a stacking direction of the battery modules.

In addition, the plurality of battery modules may be arranged side by side in a left and right direction so that the venting gas is discharged to the front or rear, and the safety bus bar may be disposed at a front or rear side of the stack of the plurality of battery modules.

In addition, the safety bus bar may include two or more different types of metal.

In addition, the safety bus bar may be configured so that the two or more different types of metal are joined to each other.

In addition, the safety bus bar may be configured so that at least one type of metal among the two or more different types of metal is meltable by the venting gas.

In addition, the safety bus bar may include two or more metal layers with different melting points, and the metal layer with a low melting point may be thicker than the metal layer with a high melting point.

In addition, in the safety bus bar, the metal layer with a high melting point may be formed with a plurality of layers.

In another aspect of the present disclosure, there is also provided an energy storage system, comprising the battery pack according to the present disclosure.

In another aspect of the present disclosure, there is also provided a vehicle, comprising the battery pack according to the present disclosure.

## Advantageous Effects

According to the present disclosure, a battery pack with safety secured against a case where a venting gas or the like is generated inside due to an event such as thermal runaway may be provided.

In particular, according to an embodiment of the present disclosure, it is possible to more effectively prevent a short circuit from occurring due to damage to power connection parts caused by the venting gas discharged from the battery module.

Accordingly, according to this embodiment of the present disclosure, risk factors such as occurrence of secondary ignition due to an internal short may be eliminated.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a perspective view schematically showing the configuration of a battery pack according to an embodiment of the present disclosure.

FIG. 2 is an exploded perspective view showing some components of FIG. 1.

FIG. 3 is a perspective view showing one battery module included in the battery pack according to an embodiment of the present disclosure.

FIG. 4 is a partial perspective view of a form in which some components of FIG. 3 are separated or removed.

FIG. 5 is a cross-sectional view showing the configuration of the battery pack according to an embodiment of the present disclosure, viewed from the top.

FIG. 6 is an enlarged perspective view showing the portion A1 in FIG. 5.

FIG. 7 is a diagram schematically showing the configuration in which a safety bus bar is cut by a venting gas in the configuration of FIG. 6.

FIG. 8 is a diagram schematically showing the configuration of a front end of the battery pack according to an embodiment of the present disclosure.

FIG. 9 is a cross-sectional view schematically showing the configuration of the safety bus bar according to an embodiment of the present disclosure, viewed from the top.

FIG. 10 is a cross-sectional view schematically showing some components of the battery pack according to an embodiment of the present disclosure.

FIG. 11 is a perspective view schematically showing some components of a safety bus bar according to another embodiment of the present disclosure.

FIG. 12 is a perspective view schematically showing some components of a safety bus bar according to still another embodiment of the present disclosure.

FIG. 13 is a perspective view schematically showing some components of a safety bus bar according to still another embodiment of the present disclosure.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

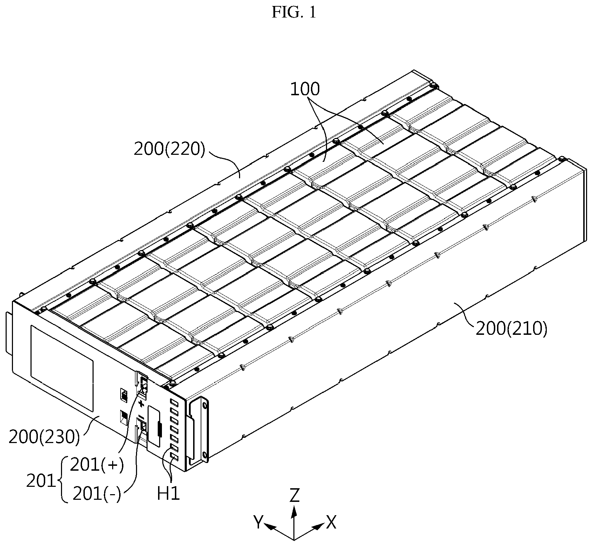

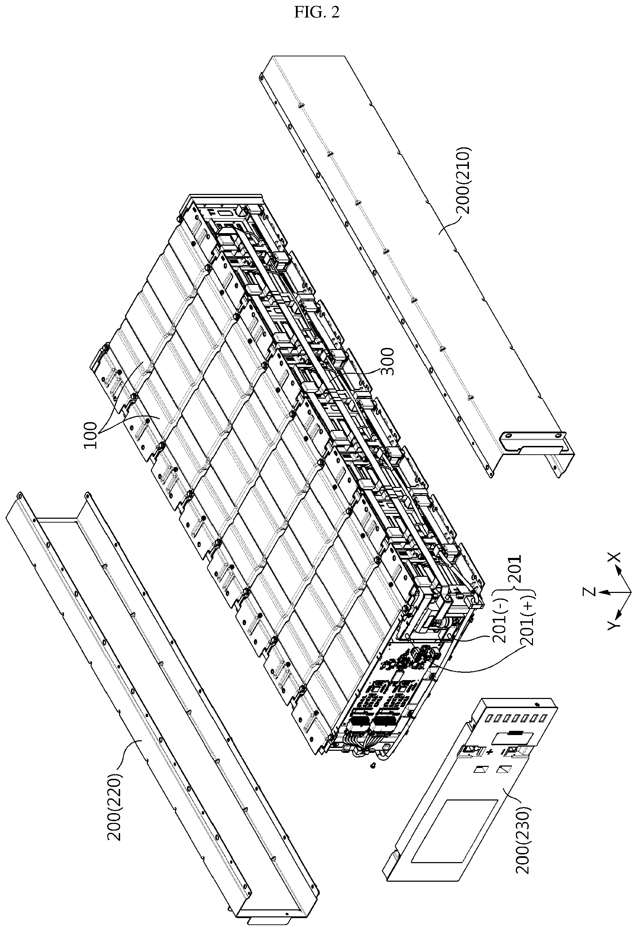

FIG. 1 is a perspective view schematically showing the configuration of a battery pack according to an embodiment of the present disclosure, and FIG. 2 is an exploded perspective view showing some components of FIG. 1.

Referring to FIGS. 1 and 2, the battery pack according to the present disclosure includes a battery module 100, a pack case 200, and a safety bus bar 300.

The battery module 100 may include at least one battery cell to store and release energy. Here, each battery cell may mean a secondary battery. In addition, one or more battery modules 100 may be included in the battery pack. In particular, in order to improve the capacity and/or output of the battery pack, a plurality of battery modules 100 may be included in the battery pack as shown in FIGS. 1 and 2. In this case, the plurality of battery modules 100 may be arranged in at least one direction. As an example, FIGS. 1 and 2 show a form in which eight battery modules 100 are arranged in the X-axis direction.

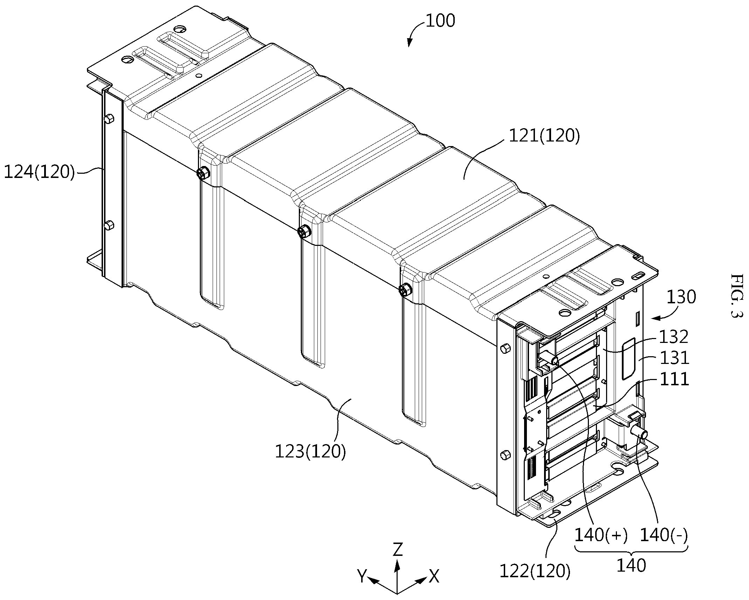

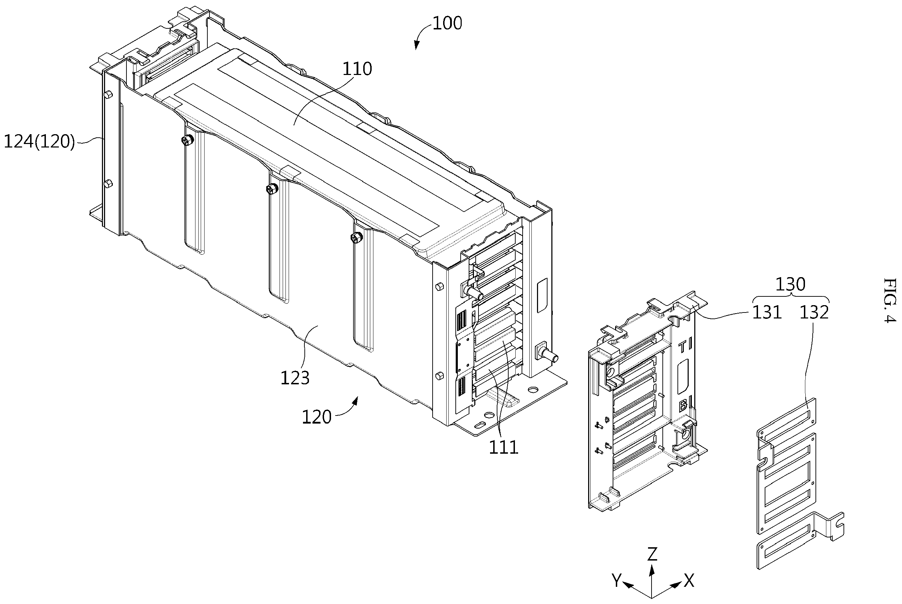

An example of a more specific configuration of the battery module 100 is shown in more detail in FIGS. 3 and 4.

FIG. 3 is a perspective view showing one battery module 100 included in the battery pack according to an embodiment of the present disclosure. Also, FIG. 4 is a partial perspective view of a form in which some components of FIG. 3 are separated or removed.

Referring to FIGS. 3 and 4, the battery module 100 may include a battery cell 110 (secondary battery).

Here, the battery cell 110 may include an electrode assembly, an electrolytic solution (electrolyte), and a battery case. Although a pouch-type secondary battery is shown in FIGS. 3 and 4, other types of secondary batteries, such as cylindrical batteries or prismatic batteries, may be included in the battery module 100.

The secondary battery may be included in plural. For example, as shown in the drawings, a battery assembly may be configured in a form in which a plurality of pouch-type secondary batteries are stacked in an upper and lower direction in a state of being laid down. At this time, electrode leads 111 of the batteries may be in direct contact with each other or electrically connected through a bus bar or the like.

In addition, the battery module 100 may include a module terminal 140. For example, in the battery module 100, the electrode lead 111 of each battery cell 110 may be located on a front and/or rear side, and the module terminal 140 may be located to be electrically connected to the electrode lead 111. In particular, the module terminal 140 may be located on the front and/or rear side of the battery module 100 and configured to protrude forward and/or rearward. Moreover, each battery module 100 may include a positive electrode module terminal 140 (+) and a negative electrode module terminal 140 (-) as the module terminals 140. At this time, the positive electrode module terminal 140 (+) and the negative electrode module terminal 140 (-) may be located on the same side of the battery module 100, for example on the front (-Y-axis direction) side as shown in the drawings. The module terminal 140 may allow the secondary battery (battery cell) 110 included in the battery module 100 to be electrically connected to other components outside the battery module 100, such as another battery module 100.

The pack case 200 may be configured to cover at least a part of the outer side of the battery module 100. Moreover, the pack case 200 may be configured to define an inner space and accommodate one or more battery modules 100 in the inner space. That is, the pack case 200 may be configured to surround at least a part of the outer side of at least one battery module 100. For example, the pack case 200 may include a front case 210, a rear case 220, and a left case 230, as shown in FIGS. 1 and 2, and be configured to cover a front end, a rear end and a left part of the stack of the plurality of battery modules 100. In addition, the pack case 200 may include a right case, an upper case, and/or a lower case to cover the right side, the upper part, and/or the lower part of the stack of the battery modules 100.

At this time, a pack terminal 201 may be provided on at least one side of the pack case 200. The pack terminal 201 may function as a terminal capable of exchanging power with an external charging or discharging device for the battery pack. That is, the pack terminal 201 may be a terminal capable of supplying a charging power to each battery module 100 inside the battery pack or providing a discharging power supplied from each battery module 100 to the outside. The pack terminal 201 may include a positive electrode pack terminal 201 (+) and a negative electrode pack terminal 201 (-). In particular, the positive electrode pack terminal 201 (+) and the negative electrode pack terminal 201 (-) may be located on the same side of the battery pack. For example, as shown in FIGS. 1 and 2, the positive electrode pack terminal 201 (+) and the negative electrode pack terminal 201 (-) of the battery pack may be located in the left case 230.

At least a part of the pack case 200 may be made of a material such as steel to protect internal components by securing mechanical strength. Moreover, at least a part of the pack case 200 may serve as a duct. For example, in FIGS. 1 and 2, the front case 210 may function as a duct. At this time, in at least one side of the pack case 200, a discharge hole may be formed in communication with the duct, as indicated by H1 in FIG. 1. Accordingly, the venting gas discharged toward the front case 210 may flow along the inner surface of the front case 210 and then be discharged to the outside of the pack case 200 through the discharge hole H1. At this time, the venting gas is not only high temperature in itself, but also may include high temperature active material particles or flames. Therefore, the front case 210 may be made of a material such as steel to withstand such high-temperature materials easily. However, the pack case 200 may be made of various other materials or shapes. In addition, the pack case 200 may be partially made of different materials.

The safety bus bar 300 may be included as a component that provides a power path in the battery pack. In addition, one or more safety bus bars 300 may be provided in the battery pack.

In particular, the safety bus bar 300 may be connected between the module terminal 140 provided in the battery module 100 and the pack terminal 201 provided in the pack case 200. Also, the safety bus bar 300 may provide an electrical path through which a charging power or a discharging power may move between the battery module 100 and the pack terminal 201. For example, both ends of the safety bus bar 300 may be connected to the negative electrode module terminal 140 (-) of at least one battery module 100 and the negative electrode pack terminal 201 (-) of the pack case 200, respectively.

Alternatively, when several battery modules 100 are included in the pack case 200, the safety bus bar 300 may be connected between module terminals 140 respectively provided several battery modules 100, so that the battery modules 100 are connected in series and/or in parallel. For example, both ends of the safety bus bar 300 may be connected between the positive electrode module terminal 140 (+) of at least one battery module 100 and the negative electrode module terminal 140 (-) of another at least one battery module 100, respectively.

The safety bus bar 300 may include an electrically conductive material to provide a power path. For example, the safety bus bar 300 may be made of a metal material having electrical conductivity. In addition, the safety bus bar 300 may also have an electrical insulating material so as not to come into contact with other parts. For example, the safety bus bar 300 may include a plastic material having electrical insulation and may be configured to cover the outer side of the metal material. Moreover, the safety bus bar 300 may be implemented in the form of a flexible bus bar configured to have flexibility in a form in which a metal plate is wrapped with a polymer material.

In particular, in the battery pack according to the present disclosure, the safety bus bar 300 may be configured to provide a power path, such that the power path is blocked by a venting gas. That is, when a venting gas is generated due to thermal runaway or the like in one or more battery modules 100 included in the battery pack, the safety bus bar 300 may be configured to block the power path by the venting gas. Moreover, when a plurality of safety bus bars 300 are included in the battery pack, all or some of the safety bus bars 300 may be configured to block the power path by the venting gas.

According to this configuration of the present disclosure, when a venting gas is generated from the battery module 100, the safety of the battery pack may be improved. Moreover, a situation in which a venting gas is generated from the battery module 100 may be referred to as an abnormal situation. In such an abnormal situation, if the power path of the safety bus bar 300 is blocked, the charging and discharging power connection to the battery pack may be blocked. Therefore, it is possible to block or reduce risk factors that may occur by continuously charging or discharging an abnormal battery pack.

Meanwhile, the battery pack according to the present disclosure may further include a pack bus bar of a general form in addition to the safety bus bar 300. For example, when a plurality of battery module 100 is included, the bus bar connecting the battery modules 100 may have a general shape, for example a shape made of one copper plate, rather than the safety bus bar 300. In addition, when the safety bus bar 300 is adopted as a pack bus bar on the negative electrode pack terminal 201 (-), a common pack bus bar, namely a general pack bus bar made of a copper plate, may be employed on the positive electrode pack terminal 201 (+).

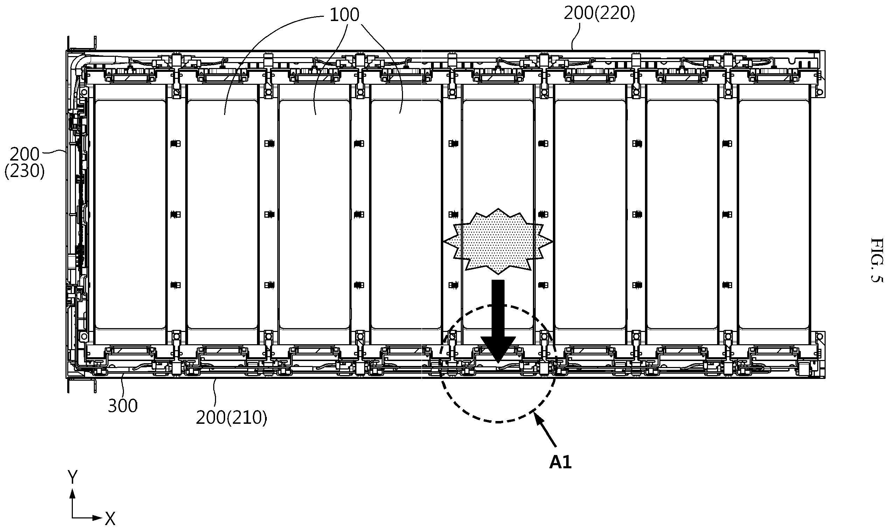

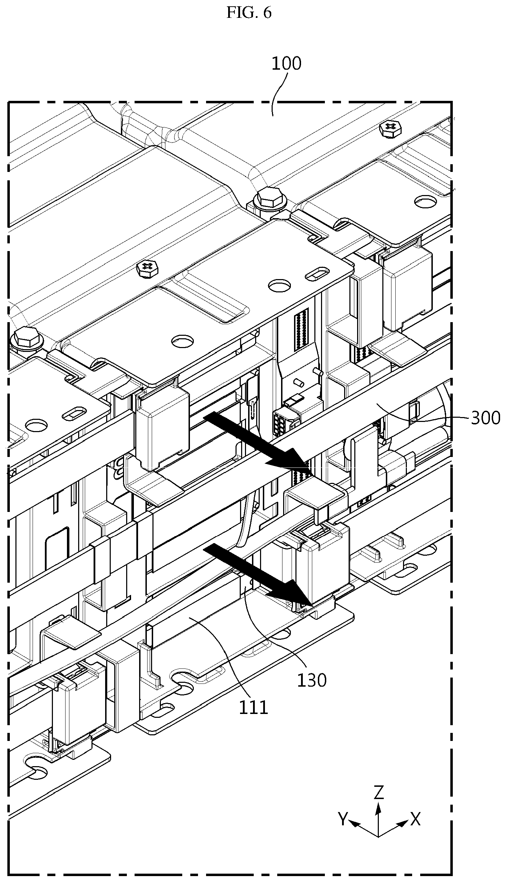

The safety bus bar 300 may be disposed at a portion where the venting gas is discharged from the battery module 100. This will be described in more detail with reference to FIGS. 5 and 6 along with FIGS. 1 to 4 above.

FIG. 5 is a cross-sectional view showing the configuration of the battery pack according to an embodiment of the present disclosure, viewed from the top. Also, FIG. 6 is an enlarged perspective view showing the portion A1 in FIG. 5. However, in FIG. 6, for convenience of illustration, the pack case 200 is not shown.

Referring to FIGS. 5 and 6, when a venting gas is generated inside one of the battery modules 100, the vented gas may be discharged in the -Y-axis direction toward the front side, as indicated by an arrow. In addition, the safety bus bar 300 may be located on the front side of the battery module 100, which is a path through which the venting gas is discharged.

In particular, the battery module 100 may include a module case 120 and a bus bar assembly 130 as shown in FIGS. 3 and 4.

Here, the module case 120 may be configured to accommodate at least one secondary battery in the inner space. For example, the module case 120 may include an upper plate 121, a lower plate 122, a side plate 123, and a rear plate 124 as shown in the drawing. In addition, the plurality of plates may be coupled to each other to accommodate the battery assembly in a limited inner space.

Here, some of the plates included in the module case 120, such as the lower plate 122 and the side plate 123, may be integrated with each other. In this case, the integrated shape of the lower plate 122 and the side plate 123 may be approximately U-shaped. Alternatively, the lower plate 122, the side plate 123 (the left plate, the right plate), and the upper plate 121 may be configured in the form of tubular mono frames integrated with each other. The plates of the module case 120 may define an inner space in a coupled state. In addition, the cell assembly may be accommodated in the inner space.

The module case 120 may be configured such that at least one side is open. In addition, the electrode lead 111 of the cell assembly may be positioned in the open portion.

In particular, the battery module 100 may include a bus bar assembly 130 to be coupled to the open portion of the module case 120. For example, as shown in FIGS. 3 and 4, the bus bar assembly 130 may be coupled to the open portion of the front side of the module case 120. The electrode lead 111 of the battery assembly may be located in the front side of the module case 120. In addition, the bus bar assembly 130 may be coupled with the electrode lead 111. As a more specific example, the bus bar assembly 130 may include a bus bar housing 131 and a module bus bar 132 as shown in FIGS. 3 and 4.

Here, the bus bar housing 131 may be made of an electrically insulating material, such as a plastic material. In addition, the bus bar housing 131 may be configured such that the module bus bar 132 is seated and fixed thereon. Also, the module bus bar 132 may be made of an electrically conductive material, such as a metal material. In addition, the module bus bar 132 may be connected to at least one electrode lead 111 to electrically connect two or more electrode leads 111 or to transmit sensing information to a control unit such as a battery management system (BMS).

The battery module 100 included in the battery pack according to the present disclosure as above may be configured so that only a specific part, for example the front side where the bus bar assembly 130 is located, is opened and the other parts may be sealed. In this case, when a venting gas or the like is generated inside the battery module 100, the venting gas or the like may be induced to be discharged only to the open portion of the module case 120, for example a front side where the bus bar assembly 130 is located. In particular, a slit may be formed in the bus bar assembly 130 so that the electrode lead 111 may pass therethrough. At this time, gas, sparks, flames, or the like inside the module may be discharged to the outside of the module case 120 through the slit of the bus bar assembly 130, as indicated by arrows in FIGS. 5 and 6.

In addition, the safety bus bar 300 may be located in the portion where the venting gas is discharged from the battery module 100 as above. Therefore, in the battery pack according to the present disclosure, it may be regarded that each battery module 100 is configured to induce the venting gas generated inside toward the safety bus bar 300 by means of the configuration of the module case 120 and the bus bar assembly 130. That is, it may be regarded that the safety bus bar 300 is located in the open portion so that the venting gas may be discharged from the battery module 100. In addition, when the venting gas is induced toward the safety bus bar 300 and discharged as above, the power path of the safety bus bar 300 may be blocked by the temperature and/or pressure of the venting gas.

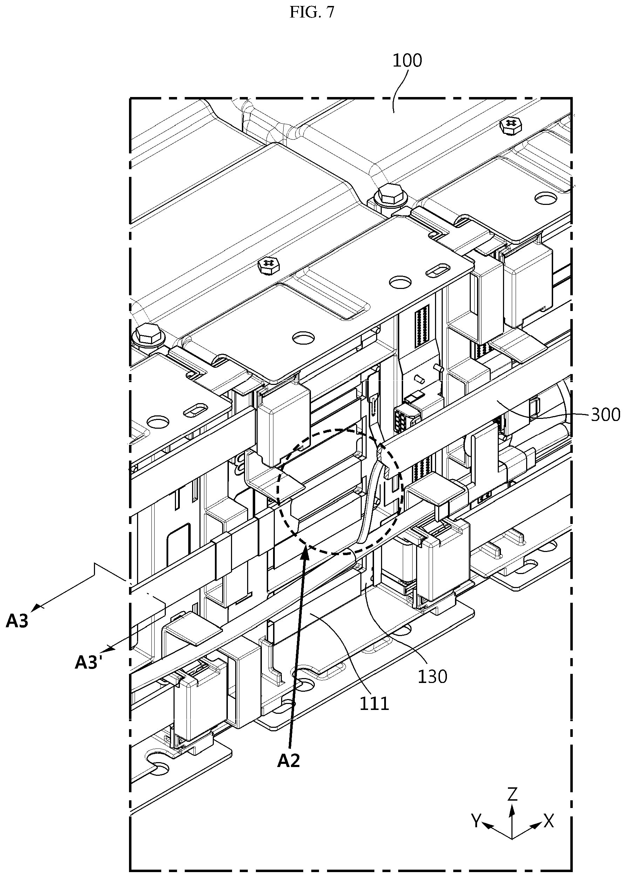

In particular, the safety bus bar 300 may be configured such that at least a portion thereof is cut by the venting gas. This will be described in more detail with reference to FIG. 7.

FIG. 7 is a diagram schematically showing the configuration in which a safety bus bar 300 is cut by a venting gas in the configuration of FIG. 6.

Referring to FIG. 7 along with FIG. 6, when a venting gas is discharged to the front side of the battery module 100, particularly toward the bus bar assembly 130, the high-temperature venting gas may be discharged with high pressure to the safety bus bar 300 located in front of the bus bar assembly 130. In addition, due to the high temperature and high pressure of the venting gas, the corresponding portion of the safety bus bar 300 may be removed and cut. In particular, a predetermined portion the safety bus bar 300 may be removed in the form of crumbling due to the discharge of the venting gas.

In this case, the power path blocking effect may be stably secured by cutting the safety bus bar 300. Moreover, in this case, even a predetermined portion of the safety bus bar 300, particularly a portion having electrical conductivity, may be completely removed into the form of fine particles. Therefore, a problem in which the cut safety bus bar 300 contacts the pack case 200, which is a conductor, or an electrode terminal of a different polarity to cause a short circuit may be prevented.

In addition, the safety bus bar 300 may be configured such that at least a part is fixed to the battery module 100 or the pack case 200. For example, the safety bus bar 300 may be configured to be fixed to module cases 120 or bus bar assemblies 130 of several battery modules 100. In this case, the position of the safety bus bar 300 may be fixed despite the ejection pressure of the venting gas, and the partial removal process by the venting gas may be performed more smoothly.

Meanwhile, as described above, the battery module 100 according to the present disclosure may be configured such that only the front side is opened, but the rear side may also be configured in an open form along with the front side. In this case, in the configuration of the battery module 100 of FIG. 3, the bus bar assembly 130 may be included instead of the rear plate 124. Also, in this case, the rear case 220 of the pack case 200 may function as a duct like the front case 210.

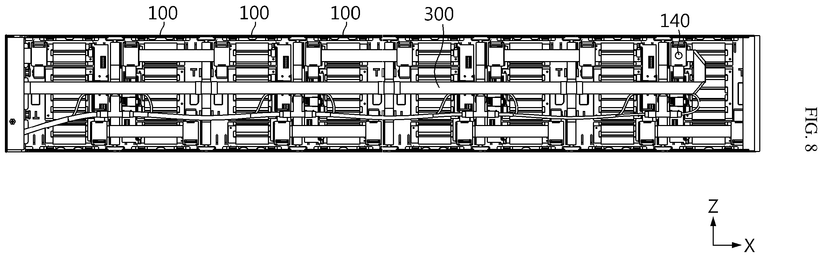

FIG. 8 is a diagram schematically showing the configuration of a front end of the battery pack according to an embodiment of the present disclosure.

Referring to FIG. 8 along with FIGS. 1, 2 and 5, the battery pack according to the present disclosure may include a plurality of battery modules 100. In this case, the plurality of battery modules 100 may be stacked in at least one direction. For example, as shown in various drawings including FIG. 8, the battery pack may include eight battery modules 100 arranged side by side in a horizontal direction, particularly in a left and right direction (X-axis direction).

Here, the safety bus bar 300 may be configured to be elongated long along the stacking direction of the battery module 100. That is, when the battery modules 100 are arranged side by side in a horizontal direction, the safety bus bar 300 may be configured to be elongated in a horizontal direction. For example, as shown in FIG. 8 and the like, the safety bus bar 300 may be configured to be elongated along the left and right direction (X-axis direction), which is the stacking direction of the battery module 100.

Moreover, the safety bus bar 300 may be connected between the pack terminal 201 and the module terminal 140 to provide a power path. At this time, the module terminal 140 of the battery module 100 located farthest from the pack terminal 201 on one side of the pack case 200 needs to be connected with the pack terminal 201. For this connection configuration, the safety bus bar 300 according to the present disclosure may be employed.

For example, in the configuration of FIG. 8, the pack terminal 201 may be located at the left end of the battery pack. At this time, one of the module terminals 140 of the battery module 100 stacked on the rightmost side of the battery pack needs to be connected to the pack terminal 201. At this time, the safety bus bar 300 may be configured to be elongated in the left and right direction to connect the pack terminal 201 located on the left side of the battery pack and the module terminal 140 of the battery module 100 located on the right side. As a more specific example, the safety bus bar 300 may be provided to connect the negative electrode pack terminal 201 (-) located on the left side and the negative electrode module terminal 140 (-) of the battery module 100 located on the rightmost side.

Moreover, each of the plurality of battery modules 100 disposed side by side in the left and right direction may be configured to discharge the venting gas forward or backward. For example, in the configuration of FIG. 8, each of the eight battery modules 100 may be opened at the front side where the bus bar assembly 130 is located, as described above in FIGS. 3 to 6, so that the venting gas may be discharged through the front portion (-Y-axis direction).

In this case, the safety bus bar 300 may be disposed on the front or rear side of the stack of the plurality of battery modules 100. For example, as shown FIG. 8 and the like, one safety bus bar 300 may be disposed on the front or rear side with respect to all eight battery modules 100. In particular, when the venting gas is discharged from each battery module 100 to the front side, the safety bus bar 300 may be configured to be elongated in the left and right direction, so as to be disposed on the front side of eight battery modules 100. That is, the safety bus bar 300 may be disposed on the outer side of the open portion through which the venting gas is discharged from the battery module 100. Moreover, when the venting gas is discharged from each battery module 100 toward the slit of the bus bar assembly 130, the safety bus bar 300 may be disposed on the outer side of the bus bar assembly 130, for example on the front side of the slit of the bus bar assembly 130.

According to this embodiment of the present disclosure, even if a venting gas is generated in any battery module 100 among the plurality of battery modules 100 included in the battery pack, the safety bus bar 300 may be cut by the venting gas. Therefore, in this case, with one safety bus bar 300, a configuration for securing safety during venting of the plurality of battery modules 100 may be effectively achieved.

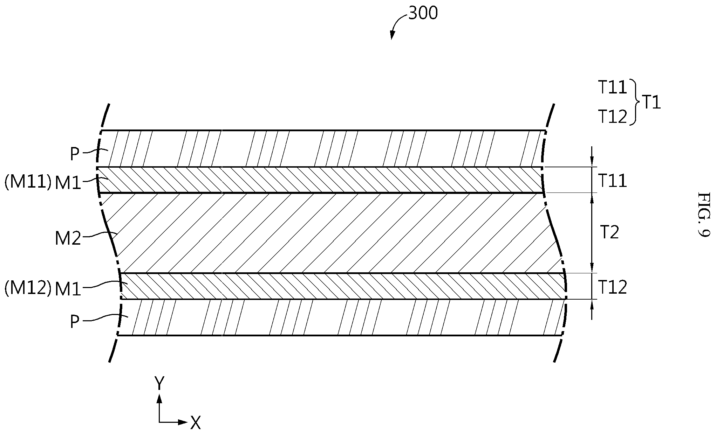

FIG. 9 is a cross-sectional view schematically showing the configuration of the safety bus bar 300 according to an embodiment of the present disclosure, viewed from the top. For example, FIG. 9 may be regarded as a cross-sectional configuration along the line A3-A3' of FIG. 7.

Referring to FIG. 9, the safety bus bar 300 may be configured to include two or more different types of metal. In particular, the safety bus bar 300 may include two or more metals having different melting points. In addition, the safety bus bar 300 may include two or more metals having different electrical conductivities.

For example, the safety bus bar 300 may include a first metal, such as the portion indicated by M1 in FIG. 9, and a second metal, such as the portion indicated by M2. In this case, the second metal may be a metal having a lower melting point and electrical conductivity than the first metal. As a more specific example, the safety bus bar 300 may include copper and aluminum.

According to this embodiment of the present disclosure, the power transmission function of the safety bus bar 300 itself may be maintained at a certain level or above through the metal having a high melting point and electrical conductivity, such as copper. In addition, when heat is applied by the venting gas to the metal having a low melting point and low electrical conductivity in the safety bus bar 300, the metal is melted to be separated or removed from the safety bus bar 300, so that the safety bus bar 300 is cut to stably achieve the power path blocking function and the short circuit prevention function. Therefore, in this case, the power transmission function in a normal state and the power blocking function and the short circuit prevention function in an emergency may be stably performed by the safety bus bar 300.

Moreover, the safety bus bar 300 may be configured such that two or more different types of metal are joined to each other. In particular, the safety bus bar 300 may be configured such that two or more types of metal plates are joined to each other in a state of being in surface contact with each other. In this case, it may be regarded that the safety bus bar 300 is configured in the form of a clad metal having two or more types of metal.

For example, referring to FIG. 9, the safety bus bar 300 may be configured in a form in which the first metal plate and the second metal plate are joined to each other. Here, the first metal plate may be a metal plate made of copper, namely a copper plate, and the second metal plate may be a metal plate made of aluminum, namely an aluminum plate. At this time, the safety bus bar 300 may be regarded as having a clad metal made of copper and aluminum.

According to this embodiment of the present disclosure, all of the power transmission function, the power blocking function, and the short circuit prevention function may be easily performed through two or more metal plates of different types, particularly different melting points.

In addition, when the safety bus bar 300 includes two or more different types of metal, at least one of these metals may be configured to be meltable by the venting gas. For example, at least one type of metal included in the safety bus bar 300 may be made of a material having a lower melting point than the temperature of the venting gas. As a more specific example, when a venting gas is generated from the battery module 100 included in the battery pack, if the temperature of the venting gas is approximately 950°C, a metal material having a lower melting point than this may be used as the second metal plate. For example, the second metal plate may be made of an aluminum material having a melting point of about 660°C. Therefore, in this case, when a gas is vented from the battery module 100, the second metal plate may be easily melted by the venting gas. Moreover, the molten material of the second metal plate may be released from the safety bus bar 300 by the pressure of the venting gas.

In this case, the first metal plate may be made of a material having a higher melting point than that of the second metal plate. In particular, the first metal plate may be made of a copper material having a melting point of about 1084°C. Even if the melting point of the first metal plate made of copper is slightly higher than the temperature of the venting gas, the thickness may not be thick due to the presence of the second metal plate. Therefore, the first metal plate may also be removed in a crumbling form by the venting gas.

Moreover, when the safety bus bar 300 includes two or more metal layers having different melting points, the metal layer with a low melting point may be formed thicker than the metal layer with a high melting point. In other words, in the safety bus bar 300, the metal layer with a high melting point may be formed thinner than the metal layer with a low melting point.

For example, in the embodiment of FIG. 9, when the thickness of the first metal plate (first metal layer M1) is T1 and the thickness of the second metal plate (second metal layer M2) is T2, the safety bus bar 300 may be designed such that T1 and T2 have the following relationship.

$$T1 < T2.$$

Moreover, the first metal plate may be formed of two layers, namely an inner metal plate M1 1 and an outer metal plate M12. In this case, when the thickness of the inner metal plate M11 is T11 and the thickness of the outer metal plate M12 is T12, the thickness T1 of the first metal plate M1 may be a value obtained by adding the thickness T11 of the inner metal plate M11 and the thickness T12 of the outer metal plate M12. In this case, the second metal plate M2 may have a thickness greater than the sum of the thicknesses of the inner metal plate M11 and the outer metal plate M12.

Moreover, the thickness of the second metal plate may be 2 times or more, 3 to 4 times or more, or 7 to 8 times or more than the thickness of the first metal plate. For example, when a copper plate is used as the first metal plate and an aluminum plate is used as the second metal plate, the thickness T1 of the copper plate may be 0.05 mm and the thickness T2 of the aluminum plate may be 0.45 mm.

According to this configuration of the present disclosure, the power transmission and blocking function, the short circuit prevention functions, and the like by the safety bus bar 300 may be secured more stably. That is, according to this embodiment, even if the first metal plate with a high melting point and good electrical conductivity is included in the safety bus bar 300 to improve the power transmission function, it may be regarded that the second metal plate with a low melting point is included in a relatively large amount. Therefore, in case of an emergency, the power blocking function and the short circuit prevention functions of the safety bus bar 300 may be more effectively achieved by the venting gas.

Meanwhile, the safety bus bar 300 may further include an insulation layer P. The insulation layer P is made of a material having electrical insulation, for example a plastic material, and may be located on the outer side of the safety bus bar 300. For example, as shown in FIG. 9, the insulation layer P may be configured to surround the first metal layer M1 and the second metal layer M2. Therefore, in the case of the cross-sectional configuration shown in FIG. 9, it may be regarded that the safety bus bar 300 includes the inner insulation layer P, the first metal layer M1 (inner metal plate), the second metal layer M2, the first metal layer M1 (outer metal plate), and the outer insulation layer P.

According to the form in which the outer side of the safety bus bar 300 is surrounded with the insulation layer P in this way, conductors such as the first metal layer M1 and the second metal layer M2 may not be exposed to the outside in a normal state. Therefore, leakage or short circuit problems caused by the contact between the safety bus bar 300 and the conductors around the safety bus bar 300 in a normal state may be prevented. However, the insulation layer P may be melted by the venting gas, and according to this embodiment of the present disclosure, since the metal layer included inside may be melted or crumbled and removed by the venting gas, the short-circuit prevention function by the safety bus bar 300 may be secured more stably.

In the safety bus bar 300, the metal layer having a high melting point may be formed with a plurality of layers. For example, as described above in the embodiment of FIG. 9, the first metal plate (first metal layer M1) having a relatively high melting point, such as a copper plate, may be formed with a plurality of layers. That is, in the embodiment of FIG. 9, the first metal plate is a copper plate and may be regarded as having an inner copper plate and an outer copper plate.

In particular, the plurality of first metal plates may be disposed on both sides of the second metal plate having a low melting point. For example, the safety bus bar 300 may be configured to have metal layers, including one aluminum layer and two copper layers located on both surfaces thereof.

According to this embodiment of the present disclosure, the thickness of the first metal plate may be made thinner. That is, in order to secure the electrical conductivity of the safety bus bar 300 to a certain level or above, if the thickness of the first metal plate needs to be a certain level or above, the first metal plate may be configured with multiple layers so that the thickness of each layer becomes thinner. For example, in order to secure the electrical conductivity of the safety bus bar 300, if the thickness of the first metal plate needs to be 0.05 mm or more, the thickness of 0.05 mm may be divided into two or more so that the thickness of each first metal plate becomes thinner. For example, when the first metal plate includes an inner metal plate and an outer metal plate, each of the inner metal plate and the outer metal plate may have a thickness of 0.025 mm.

According to this embodiment of the present disclosure, the electrical conductivity of the safety bus bar 300 may be stably maintained by securing the entire thickness of the first metal plate M1 to a certain level or above. In addition, since the thickness of each of the first metal plate M 1 becomes thin, the effect of crumbling into powder or the like by the venting gas may be easily achieved. In particular, when the first metal plate is a copper plate, the melting point of copper may be higher than the temperature of the venting gas, but as the thickness thereof becomes thinner, the effect of crumpling by the venting gas may be more easily achieved.

Moreover, when the first metal plate M1 includes an inner metal plate and an outer metal plate, the inner metal plate may have the same thickness as the outer metal plate. In this case, by making the thicknesses of the inner metal plate and the outer metal plate as thin as possible, the effect of crumpling the first metal plate may be achieved more easily.

Alternatively, in the safety bus bar 300, the thickness of the inner metal plate may be formed thinner than the thickness of the outer metal plate. When a venting gas is discharged from the battery module 100, the venting gas may collides with the inner metal plate first. At this time, when the thickness of the inner metal plate is thin, the inner metal plate may be more easily removed and the second metal plate may be melted more quickly.

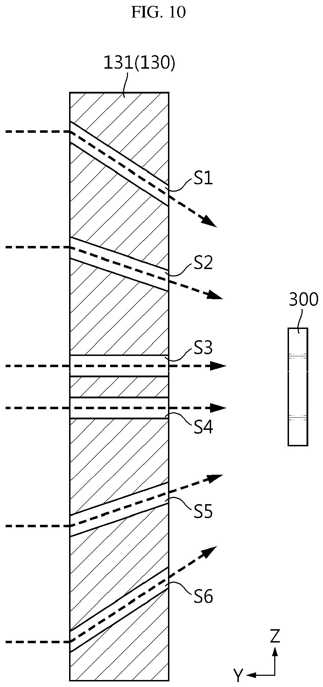

Meanwhile, as described above, at least a part of the safety bus bar 300 may be cut off by the venting gas discharged from the battery module 100, so that power blocking and short circuit prevention functions may be implemented. At this time, other components of the battery pack, such as the battery module 100, may be configured to more easily implement the configuration of cutting the safety bus bar 300 by the venting gas. Embodiments related to this will be described in more detail with reference to FIG. 10.

FIG. 10 is a cross-sectional view schematically showing some components of the battery pack according to an embodiment of the present disclosure. In particular, in FIG. 10, for convenience of explanation, the bus bar housing 131 of the bus bar assembly 130 and the safety bus bar 300 are shown excluding other components.

Referring to FIG. 10, slits S1 to S6 penetrating from the inner side to the outer side of the battery module 100 may be formed in the bus bar housing 131. In FIG. 10, the left side is the inner portion of the battery module 100, and the right side is the outer portion of the battery module 100. In addition, the electrode leads 111 of the secondary battery may be inserted into this slit S1 to S6 and connected to the module bus bar 132 at the outer side. In addition, when a venting gas is generated inside the battery module 100, the venting gas may be discharged to the outside through the slits S1 to S6, as indicated by arrows.

At this time, the slits S1 to S6 of the bus bar assembly 130, particularly the slit of the bus bar housing 131, may be configured such that the venting gas passing therethrough is directed toward the safety bus bar 300. Seeing the configuration of FIG. 10 in more detail, the safety bus bar 300 may be located on the front side (outer side) of the bus bar assembly 130. At this time, at least some of the slits S1 to S6 of the bus bar assembly 130 may be configured in an inclined shape so that venting gas flows toward the safety bus bar 300.

Moreover, the safety bus bar 300 is located on the front side of the bus bar assembly 130, but may be located in a central portion in the upper and lower direction (Z-axis direction). At this time, at least some of the slits S1 to S6 of the bus bar assembly 130 may be configured in an inclined shape toward the front center portion. That is, like S 1 and S2, the slit located higher than the safety bus bar 300 in the vertical direction (Z-axis direction) in the bus bar assembly 130 may be configured to be inclined downward from the inner side to the outer side. In addition, like S5 and S6, the slit located lower than the safety bus bar 300 in the vertical direction (Z-axis direction) in the bus bar assembly 130 may be configured to be inclined upward from the inner side to the outer side. In addition, like S3 and S4, the slit located in the center portion in the upper and lower direction in the bus bar assembly 130 is located similar to the safety bus bar 300 in the vertical direction (Z-axis direction), so it may be configured to discharge the in the horizontal direction (direction parallel to the ground).

According to this configuration of the present disclosure, the venting gas passing through the slit of the bus bar assembly 130 may be concentrated on the safety bus bar 300. Therefore, the effect of cutting and removing the safety bus bar 300 may be further improved.

In addition, when the slits of the bus bar assembly 130 are configured in an inclined shape, at least some of the slits may have different inclination angles. Here, the inclination angle may mean an angle inclined from the horizontal direction (Y-axis direction).

Moreover, even the slits inclined downward may be configured to have different inclination angles. For example, in the embodiment of FIG. 10, S 1 and S2, which are slits located higher than the safety bus bar 300, are inclined downward, but their slopes may be different from each other. In particular, the slit S 1 located at the relatively upper side may have a greater inclination angle in the lower direction than that of the slit S2 located at the relatively lower side. That is, as the slit is located higher than the safety bus bar 300 in the upper and lower direction, its inclination angle may be formed to be larger in the lower direction.

In addition, even the slits inclined upward may be configured to have different inclination angles. For example, in the embodiment of FIG. 10, S5 and S6, which are slits located lower than the safety bus bar 300, are inclined upward, but their slopes may be different from each other. In particular, the slit S6 located at the relatively lower side may have a greater inclination angle in the upper direction than that of the slit S5 located at the relatively upper side. That is, as the slit is located lower than the safety bus bar 300 in the upper and lower direction, its inclination angle may be formed to be larger in the upper direction.

That is, when several slits are included as in the embodiment, a slit farther apart in the upper and lower direction from the safety bus bar 300 may be configured to have a relatively large inclination angle.

According to this embodiment of the present disclosure, the effect of concentrating the venting gas passing through the slit to the safety bus bar 300 may be further increased. Therefore, in this case, the effect of cutting and removing the safety bus bar 300 by the venting gas may be enhanced further.

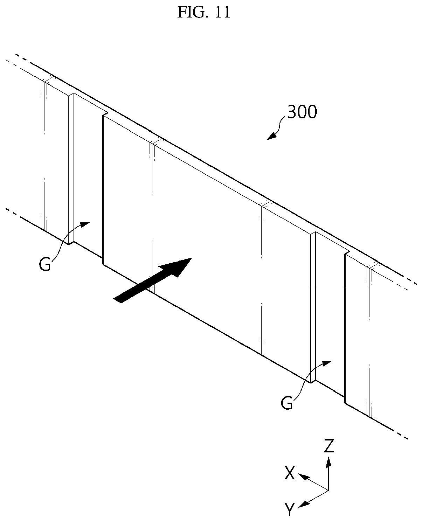

FIG. 11 is a perspective view schematically showing some components of a safety bus bar 300 according to another embodiment of the present disclosure.

In particular, FIG. 11 may be regarded as showing the inner surface of the safety bus bar 300, namely the surface viewed from the battery module 100. This embodiment will be mainly explained based on features different from the former embodiments.

Referring to FIG. 11, the safety bus bar 300 may have a groove formed as indicated by G. The groove G may be formed concavely on the surface of the safety bus bar 300 in an inner direction thereof. In particular, the groove G may be formed in a concave shape in the outer direction of the battery pack on the inner surface of the safety bus bar 300. Moreover, the groove G may be formed such that the thickness of the safety bus bar 300 becomes thinner.

According to this embodiment of the present disclosure, the safety bus bar 300 may be cut by the venting gas more effectively. In particular, as indicated by an arrow in FIG. 11, when a venting gas is ejected from the battery module 100 toward the safety bus bar 300, the venting gas may cut the safety bus bar 300 more easily by the groove G.

Moreover, in this case, the cutting position of the safety bus bar 300 by the venting gas may be guided by the groove G. In particular, as shown in FIG. 11, two grooves G may be formed on both sides of the portion of the safety bus bar 300 facing the venting gas. In this case, the venting gas is ejected into the portion between the two grooves G, and the portion between the two grooves G may be lost by the venting gas. Therefore, in this case, the safety bus bar 300 is cut more reliably, and also the cutting position may be clearly defined.

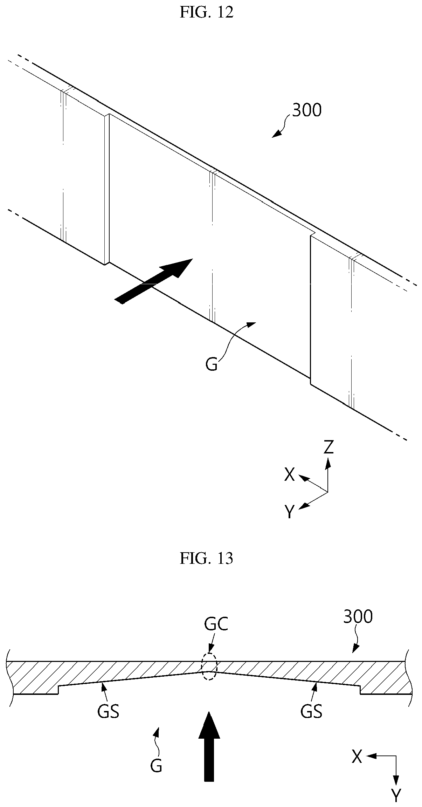

FIG. 12 is a perspective view schematically showing some components of a safety bus bar according to still another embodiment of the present disclosure. FIG. 12 may also be regarded as showing the inner surface of the safety bus bar 300.

Referring to FIG. 12, the groove G may be formed on the inner surface of the safety bus bar 300 to directly face the venting gas ejection portion. That is, as indicated by an arrow in FIG. 12, when a venting gas is ejected from the battery module 100, the groove G of the safety bus bar 300 may be formed at a portion that faces the venting gas. At this time, the groove G may be formed with a wider area than the groove G formed in the embodiment of FIG. 11.

According to this embodiment of the present disclosure, the force of cutting the safety bus bar 300 by the venting gas may be improved even with one groove G. In addition, in this case, the safety bus bar 300 and the battery pack may be manufactured more efficiently.

FIG. 13 is a perspective view schematically showing some components of a safety bus bar 300 according to still another embodiment of the present disclosure. For example, FIG. 13 may be regarded as a cross-sectional view showing the configuration of the safety bus bar 300, viewed from the top. Moreover, FIG. 13 may be regarded as a modification of the embodiment of FIG. 12.

Referring to FIG. 13, a groove G may be formed on the inner surface of the safety bus bar 300 at a portion facing the venting gas. At this time, the groove G of the safety bus bar 300 may have an inclined surface that is inclined in a specific direction, as indicated by GS. At this time, the inclined surface GS may be formed such that the thickness of the safety bus bar 300 becomes thinner toward the center portion GC of the groove G. That is, the groove G of the safety bus bar 300 may be configured such that its depth increases toward the center portion GC from both ends.

According to this embodiment of the present disclosure, as indicated by an arrow in FIG. 13, when a venting gas is ejected into the groove G of the safety bus bar 300, the venting gas may be concentrated on a specific part of the groove G. In particular, the venting gas moves to the center portion GC along the inclined surface GS of the groove G, so that the heat and pressure of the venting gas may be more concentrated on the center portion GC of the groove G. Therefore, the safety bus bar 300 may be cut more quickly and reliably. Therefore, the effect of cutting the safety bus bar 300 by the venting gas may be further improved.

The battery pack according to the present disclosure may further include various other components of the battery pack known at the time of filing of this application. For example, the battery pack according to the present disclosure may further include components such as a battery management system (BMS), a current sensor, and a fuse.

An energy storage system according to the present disclosure may include at least one battery pack according to the present disclosure. In particular, a plurality of battery packs according to the present disclosure may be included in the energy storage system to have a large energy capacity. In addition, the energy storage system according to the present disclosure may further include various other components of the energy storage system known at the time of filing of this application. Moreover, the energy storage system may be used in various places or devices, such as a smart grid system or an electric charging station.

In addition, the vehicle according to the present disclosure may include the battery pack according to the present disclosure. Also, the vehicle according to the present disclosure may further include other various components included in a vehicle, in addition to the battery pack. For example, the vehicle according to the present disclosure may further include a vehicle body, a motor, and a control device such as an electronic control unit (ECU), in addition to the battery pack according to the present disclosure.

Meanwhile, in this specification, terms indicating directions such as "upper", "lower", "left", "right", "front", and "rear" may be used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Reference Signs

    100: battery module
    110: battery cell
    111: electrode lead
    120: module case
    121: upper plate, 122: lower plate, 123: side plate, 124: rear plate
    130: bus bar assembly
    131: bus bar housing, 132: module bus bar
    140: module terminal
    200: pack case
    210: front case, 220: rear case, 230: left case
    300: safety bus bar
    H1: discharge hole
    M1: first metal layer, M2: second metal layer, P: insulation layer
    S1-S6: slit
    G: groove

Claims

1.   A battery pack, comprising:

        a battery module including at least one battery cell and a module terminal;
        a pack case configured to cover at least a part of an outer side of the battery module and having a pack terminal on at least one side; and
        a safety bus bar connected between the module terminal and the pack terminal or between the module terminals to provide a power path and configured to block the power path by a venting gas discharged from the battery module.

2.   The battery pack according to claim 1, wherein the safety bus bar is disposed in a portion to the venting gas is discharged from the battery module.

3.   The battery pack according to claim 1,

        wherein a plurality of battery modules are included and stacked in at least one direction, and the safety bus bar is configured to be elongated along a stacking direction of the battery modules.

4. The battery pack according to claim 3,

   wherein the plurality of battery modules are arranged side by side in a left and right direction so that the venting gas is discharged to the front or rear, and
   the safety bus bar is disposed at a front or rear side of the stack of the plurality of battery modules.

5. The battery pack according to claim 1, wherein the safety bus bar includes two or more different types of metal.

6. The battery pack according to claim 5, wherein the safety bus bar is configured so that the two or more different types of metal are joined to each other.

7. The battery pack according to claim 5, wherein the safety bus bar is configured so that at least one type of metal among the two or more different types of metal is meltable by the venting gas.

8. The battery pack according to claim 7, wherein the safety bus bar includes two or more metal layers with different melting points, and the metal layer with a low melting point is thicker than the metal layer with a high melting point.

9. The battery pack according to claim 8, wherein in the safety bus bar, the metal layer with a high melting point is formed with a plurality of layers.

10. An energy storage system, comprising the battery pack according to any one of claims 1 to 9.

11. A vehicle, comprising the battery pack according to any one of claims 1 to 9.

FIG. 1

FIG. 2

FIG. 3

FIG. 4

FIG. 5

FIG. 6

FIG. 7

FIG. 8

FIG. 9

FIG. 10

131(130)

S1

S2

300

S3

S4

S5

S6

Z

Y

FIG. 11

FIG. 12

300

G

Z
X
Y

FIG. 13

GC

300

GS          GS

G

X
Y

## INTERNATIONAL SEARCH REPORT

| International application No. |
|---|
| **PCT/KR2022/012768** |

**A.    CLASSIFICATION OF SUBJECT MATTER**

**H01M 50/578**(2021.01)i; **H01M 50/588**(2021.01)i; **H01M 50/581**(2021.01)i; **H01M 50/522**(2021.01)i; **H01M 50/249**(2021.01)i

According to International Patent Classification (IPC) or to both national classification and IPC

**B.    FIELDS SEARCHED**

Minimum documentation searched (classification system followed by classification symbols)

H01M 50/578(2021.01); H01M 10/44(2006.01); H01M 10/48(2006.01); H01M 2/02(2006.01); H01M 2/10(2006.01); H01M 2/12(2006.01); H01M 2/20(2006.01); H01M 2/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 팩(battery pack), 버스바(bus bar), 벤팅 가스(venting gas), 용융(melting)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2013-0080023 A (LG CHEM, LTD.) 11 July 2013 (2013-07-11)<br>See paragraphs [0005], [0053] and [0069]-[0080] and figures 3-7. | 1-11 |
| Y | US 2020-0287179 A1 (CONTEMPORARY AMPEREX TECHNOLOGY CO., LIMITED) 10 September 2020 (2020-09-10)<br>See paragraphs [0122] and [0124] and figures 12-14. | 1-11 |
| A | CN 207765491 U (CHANGCHENG AUTOMOBILE CO., LTD.) 24 August 2018 (2018-08-24)<br>See claims 1-9 and figures 1-6. | 1-11 |
| A | KR 10-2015-0121518 A (SK BATTERY SYSTEMS CO., LTD.) 29 October 2015 (2015-10-29)<br>See paragraphs [0033]-[0060] and figures 1-4. | 1-11 |
| A | JP 2020-042968 A (TOYOTA INDUSTRIES CORP.) 19 March 2020 (2020-03-19)<br>See paragraphs [0019]-[0058] and figures 1-6. | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2022** | **28 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012768**

| Patent document cited in search report | | | Publication date (day/month/year) | Patent family member(s) | | | Publication date (day/month/year) |
|---|---|---|---|---|---|---|---|
| KR | 10-2013-0080023 | A | 11 July 2013 | CN | 103650209 | A | 19 March 2014 |
| | | | | CN | 103650209 | B | 17 August 2016 |
| | | | | EP | 2698847 | A1 | 19 February 2014 |
| | | | | EP | 2698847 | B1 | 04 March 2020 |
| | | | | JP | 2014-519153 | A | 07 August 2014 |
| | | | | KR | 10-1463196 | B1 | 21 November 2014 |
| | | | | PL | 2698847 | T3 | 15 June 2020 |
| | | | | US | 2014-0065467 | A1 | 06 March 2014 |
| | | | | US | 9887413 | B2 | 06 February 2018 |
| | | | | WO | 2013-103244 | A1 | 11 July 2013 |
| US | 2020-0287179 | A1 | 10 September 2020 | CN | 111668527 | A | 15 September 2020 |
| | | | | EP | 3706189 | A1 | 09 September 2020 |
| | | | | EP | 3706189 | B1 | 04 August 2021 |
| | | | | JP | 2022-522347 | A | 18 April 2022 |
| | | | | US | 11251487 | B2 | 15 February 2022 |
| | | | | WO | 2020-177721 | A1 | 10 September 2020 |
| CN | 207765491 | U | 24 August 2018 | None | | | |
| KR | 10-2015-0121518 | A | 29 October 2015 | None | | | |
| JP | 2020-042968 | A | 19 March 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210113529

- KR 1020220106420